# DEMANDE DE BREVET EUROPEEN

(11) **EP 0 541 439 A1**
(43) Date de publication de la demande: **12.05.1993**
(21) Numéro de dépôt: 92402983.8
(22) Date de dépôt: 04.11.1992
(51) Int. Cl.: H04M 1/02

(54) **Dispositif de communication auditive comportant un detecteur de proximité**

(30) Priorité: 08.11.1991 FR 9113805
(71) Demandeur: HYGIAPHONE V.B. société anonyme, F-94120 Fontenay sous Bois (FR)
(72) Inventeur: Rihiant, Serge, F-94600 Choisy le Roi (FR)
(74) Mandataire: Keib, Gérard

(57) **Abrégé**

L'invention concerne un dispositif de communication auditive tel qu'un dispositif d'interphonie. Il comporte une borne comprenant un support (20) sur lequel sont montés un microphone (13), un haut-parleur (4) , un détecteur de proximité (2) et une unité électronique (50) pour commander des fonctions de communication auditive. Le détecteur de proximité (2) fournit un signal de détection de présence tant qu'un interlocuteur est dans une zone de proximité prédéterminée. L'unité électronique (50) est agencée pour ne permettre une communication auditive à travers le microphone (13) que lorsqu'existe un signal de détection de présence. Le support (20) présente des moyens de montage (27) permettant d'intégrer le dispositif à une installation fixe.

Application à l'interphonie pour les guichets à protection frontale.

## Description

La présente invention a pour objet un dispositif de communication auditive pour permettre de réaliser la gestion d'un guichet ou d'un site nécessitant un dialogue entre deux interlocuteurs.

Les dispositifs de communication auditive d'un type connu sont généralement installés dans des guichets sous forme d'une pluralité d'éléments qui sont ensuite raccordés entre eux par câblage. On dispose ainsi un microphone dans une partie latérale du guichet, des haut-parleurs sur une face supérieure formant un bandeau, et une unité électronique est localisée dans le corps du guichet. Dans ces conditions, la fonction d'interphonie fait partie intégrante de la construction du guichet. Outre les problèmes liés à la complication de leur montage, ces dispositifs de communication auditive ou d'interphonie sont d'une utilisation malcommode en ambiance bruyante, notamment dans des locaux où les guichets sont voisins les uns des autres. Le dispositif d'interphonie retransmet alors aux agents et avec amplification les bruits ambiants en provenance de l'autre côté du guichet. Pour remédier à cet inconvénient, il a été proposé des installations destinées à des milieux particulièrement bruyants, tels que des ateliers de chaudronnerie ou de forge, etc, utilisant des microphones ultradirectionnels accouplés à des haut-parleurs rapprochés. Ces appareils volumineux et très visibles doivent être utilisés à proximité des lèvres et des oreilles. L'hygiène y est donc peu rigoureuse et l'utilisation demande aux interlocuteurs une adaptation non compatible avec le grand public.

La présente invention concerne un dispositif de communication auditive qui soit facile à monter dans un guichet non spécifiquement prévu pour l'interphonie et qui permette de minimiser l'influence des bruits ambiants extérieurs.

L'invention concerne dans ce but un dispositif de communication auditive caractérisé en ce qu'il est constitué par une borne comprenant un support sur lequel sont montés un dispositif microphonique, au moins un haut-parleur, un détecteur de proximité pour détecter un interlocuteur dans une zone de proximité prédéterminée, et une unité électronique pour commander des fonctions de communication auditive, en ce que le détecteur de proximité est agencé de manière à fournir un signal de détection de présence au moins tant qu'un interlocuteur est dans la zone de proximité, en ce que l'unité électronique est agencée pour ne permettre la communication auditive à travers le dispositif microphonique que lorsqu'existe un dit signal de détection de présence et en ce que le support présente des moyens de montage permettant d'intégrer le dispositif à une installation fixe telle qu'un guichet.

Selon un mode de réalisation avantageux, le détecteur de proximité est temporisé de manière à fournir ledit signal d'indication de présence également pendant un temps prédéterminé après que l'interlocuteur ait quitté la zone de proximité.

Selon un mode de réalisation préféré, la zone de proximité est définie par un angle donné dans le plan horizontal par exemple sensiblement égal à 60° et par une distance d'éloignement du dispositif, par exemple sensiblement égale à 60 cm.

Selon une variante avantageuse, l'unité électronique est agencée pour produire une signalisation sonore et/ou visuelle en l'absence dudit signal d'indication de présence.

Selon une variante préférée, l'unité électronique est agencée pour produire une indication sonore et/ou visuelle d'accueil lors de l'apparition d'un signal d'indication de présence, par exemple par éclairement d'au moins une partie de la zone de proximité, éclairement qui est maintenu tant qu'existe ledit signal d'indication de présence. On obtient ainsi un fonctionnement convivial du dispositif de communication auditive en raison du fait que l'interlocuteur qui s'approche du guichet est averti de la mise en service des fonctions d'interphonie du dispositif.

L'unité électronique peut être agencée pour générer un état inactif et un état actif du dispositif, suivant une commande manuelle, et, dans l'état inactif, l'unité électronique est agencée pour produire un message sonore et/ou visuel. Ceci permet d'avertir un interlocuteur par exemple de l'absence de l'agent ou de la fermeture du guichet et de lui donner des instructions éventuelles lui permettant de s'adresser à un autre guichet ouvert.

Selon un mode de réalisation, le dispositif comporte un capot destiné à être monté sur le support.

Le dispositif peut comporter un câble de raccordement relié à une extrémité, à l'unité électronique et à son autre extrémité, à un dispositif de sélection de fonctions. Une fois intégré à une installation fixe telle qu'un guichet, le dispositif ne nécessite plus que le passage d'un câble pour réaliser une fonction d'interphonie. Le dispositif de sélection de fonctions peut également comporter un microphone.

D'autres caractéristiques et avantages de l'invention apparaîtront mieux à la lecture de la description qui va suivre, donnée à titre d'exemple non limitatif, en liaison avec les dessins qui représentent :
- la figure 1, une vue éclatée d'une borne selon l'invention ; et
- la figure 2, un schéma de raccordement correspondant à des fonctions multiples.

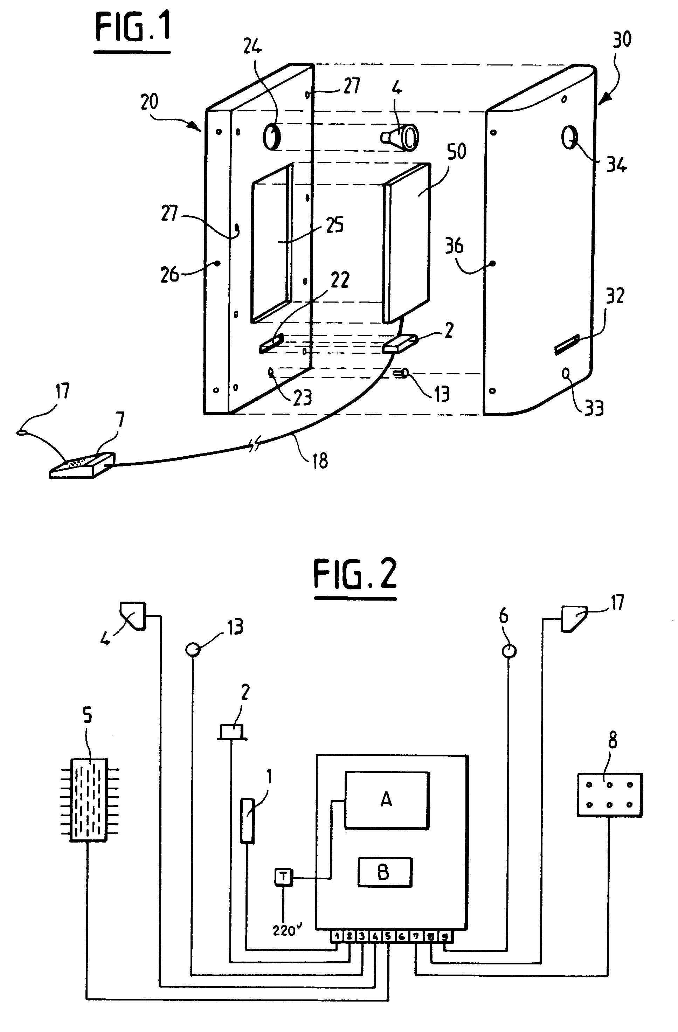

Selon la figure 1, un support 20 de forme générale rectangulaire destiné à être monté verticalement, par exemple d′1 mètre de haut sur un 0,3 mètre de large, présente des trous de fixation 27 pour permettre son montage dans une installation fixe telle qu'un guichet dans lequel il peut être monté en même temps que le guichet est installé, soit ultérieurement, par exemple par remplacement d'un profilé d'habillage. Le support 20 présente une ouverture 24 destinée à recevoir un haut parleur 4, un logement 25 destiné à recevoir une unité électronique de commande 50, une ouverture 22 destinée à recevoir un détecteur de proximité 2 et une ouverture 23 pour recevoir une capsule microphonique 13. En outre, un câble 18 peut relier l'unité électronique 50 à un clavier de commande de fonctions 7 auquel est éventuellement adjoint un microphone 17. Le clavier de commande de fonctions est actionné par l'agent du guichet de manière à permettre toute commande manuelle (notamment Marche/Arrêt) alors que le détecteur de présence 2 a pour fonction de détecter un interlocuteur dans une zone de proximité prédéterminée, par exemple selon un angle de 60° dans un plan horizontal et une distance de l'ordre de 60 cm. Le détecteur de présence peut être le modèle E35M-PS70 de la société OMRON ELECTRONICS. Un tel détecteur permet un maintien d'un signal de détection tant qu'un individu est présent dans la zone de proximité précédemment définie. En outre, une temporisation permet de maintenir le signal de détection de présence pendant un certain temps, par exemple 5 secondes, après qu'un interlocuteur ait quitté la zone de proximité. On obtient ainsi une première temporisation par laquelle, lorsque le client quitte le guichet, il reste un certain temps dans la zone de proximité, temps pendant lequel le signal de détection de présence est maintenu, et éventuellement une deuxième temporisation maintenant le signal de détection de présence pendant un certain temps après que l'interlocuteur ou le client ait quitté la zone de détection.

La première temporisation agit également lorsque le client s'approche du guichet, les fonctions d'interphonie étant déjà mises en route lorsque le client atteint le guichet.

Un capot 30 de dimensions extérieures sensiblement égales à celles du support 20 présente des trous de fixation 36 coopérant avec des alésages correspondants 26 du support 20 en vue de son montage sur celui-ci. Le capot 30 présente une ouverture 34 pour le haut-parleur 4, une ouverture 32 pour le détecteur de proximité 2 et une ouverture 33 pour la capsule microphonique 13.

Selon la figure 2, l'unité électronique 50 comporte une carte électronique multifonctions 5, un bornier B et un amplificateur A. La carte 5 est de conception voisine des cartes connues, le signal de détection de présence étant utilisé comme signal d'autorisation ou d'inhibition de fonctions de la carte. Le bornier B permet, de manière connue en soi, d'assurer l'interconnexion entre les différents éléments en fonction des instructions fournies par la carte électronique multifonctions 5. C'est ainsi qu'à la figure 2 on a représenté un certain nombre d'éléments raccordés au bornier B à savoir, une boucle d'induction pour malentendants 1, le détecteur de présence 2 tel que décrit ci-dessus, le microphone 13 côté client, le haut-parleur 4 côté client, une borne libre 6 en vue d'une extension des fonctions, le microphone 17 côté agent, et un clavier 8 de mise en service des fonctions de la carte 5. Le clavier 8 peut être constitué par le clavier 7 de la figure 1 relié par un câble à l'unité électronique de commande 50.

La modularité de la carte électronique permet, à partir de la mise en route de la communication phonique par le détecteur de présence, de connecter également une signalisation sonore ou visuelle, une surveillance par caméra vidéo, une ou plusieurs liaisons phoniques externes notamment avec d'autres centres de renseignements, une liaison ordinateur-moniteur offrant au public une information en l'absence d'un préposé, et/ou une liaison sur centrale d'alarme muette ou sonore. La modularité de la borne selon l'invention permet de gérer toutes les fonctions que l'on désire et d'assurer une maintenance immédiate par simple échange de la borne car son montage est particulièrement simple. La borne selon l'invention est ainsi destinée à assurer les fonctions de la zone publique d'un guichet. La zone service comprend un socle pouvant être intégré ou non dans le plan de travail et comprenant un microphone, un haut-parleur, une centrale électronique de gestion phonique et un clavier pour la gestion multifonctions de la borne. Le clavier et le microphone peuvent être réalisés comme représenté à la figure 1. On voit que la réalisation d'une installation d'interphonie pour guichet est particulièrement facile.

On décrira ci-après un certain nombre de fonctions particulièrement intéressantes.

Tout d'abord, il est utile de disposer d'une signalisation sonore et/ou visuelle en l'absence d'un signal de détection de présence. Ceci peut permettre en particulier d'indiquer à distance à un client ou un interlocuteur que le guichet est disponible.

Il est également avantageux que l'unité électronique produise une indication sonore et/ou visuelle d'accueil simultanément avec l'apparition d'un signal de détection de présence. Ceci donne en effet un caractère convivial au guichet, en particulier lorsque l'indication d'accueil consiste en un éclairement de la surface sur laquelle vient s'appuyer le client.

Il est enfin particulièrement avantageux que l'unité électronique soit capable, en réponse à une commande manuelle de l'agent, de générer un état inactif et un état actif du dispositif. L'état actif correspond au fonctionnement normal de la borne dans ses fonctions d'interphonie. Dans l'état inactif, l'unité électronique produit un message sonore et/ou visuel à l'intention d'un client éventuel de manière à lui signaler que le guichet est indisponible et éventuellement de l'aiguiller vers un autre guichet.

## Revendications

**1 -** Dispositif de communication auditive caractérisé en ce qu'il est constitué par une borne comprenant un support (20) sur lequel sont montés un disopsitif microphonique (13), au moins un haut-parleur (4), un détecteur de proximité (2) pour détecter un interlocuteur dans une zone de proximité prédéterminée, et une unité électronique (50) pour commander au moins les fonctions de communication auditive, en ce que le détecteur de proximité (2) est agencé de manière à fournir un signal de détection de présence au moins tant qu'un interlocuteur est dans la zone de proximité, en ce que l'unité électronique (50) est agencée pour ne permettre une communication auditive à travers le dispositif microphonique (13) que lorsqu'existe un dit signal de détection de présence, et en ce que le support (20) présente des moyens de montage (27) permettant d'intégrer le dispositif à une installation fixe.

**2 -** Dispositif selon la revendication 1, caractérisé en ce que le détecteur de proximité (2) est temporisé de manière à fournir ledit signal de détection de présence également pendant un temps prédéterminé après que l'interlocuteur ait quitté la zone de proximité.

**3 -** Dispositif selon une des revendications 1 ou 2, caractérisé en ce que la zone de proximité est définie par un angle donné dans le plan horizontal et par une distance donnée d'éloignement par rapport au dispositif.

**4 -** Dispositif selon la revendication 3, caractérisé en ce que l'angle est sensiblement égal à 60° et la distance est sensiblement égale à 60 cm.

**5 -** Dispositif selon une des revendications précédentes, caractérisé en ce que l'unité électronique (50) est agencée pour produire une signalisation sonore et/ou visuelle en l'absence dudit signal de détection de présence.

**6 -** Dispositif selon une des revendications précédentes, caractérisé en ce que l'unité électronique (50) est agencée pour produire une indication sonore et/ou visuelle d'accueil lors de l'apparition d'un signal de détection de présence.

**7 -** Dispositif selon la revendication 6, caractérisé en ce que l'indication d'accueil consiste en un éclairement d'au moins une partie de la zone de proximité, éclairement qui est maintenu tant qu'existe ledit signal de détection de présence.

**8 -** Dispositif selon une des revendications précédentes, caractérisé en ce que l'unité électronique (50) est agencée pour générer un état inactif et un état actif du dispositif, suivant une commande manuelle, et en ce que, dans l'état inactif, l'unité électronique (50) est agencée pour produire un message sonore et/ou visuel.

**9 -** Dispositif selon une des revendications précédentes, caractérisé en ce qu'il comporte un capot (30) destiné à être monté sur le support.

**10 -** Dispositif selon une des revendications précédentes caractérisé en ce qu'il comporte un câble de raccordement (18) relié à une extrémité à l'unité électronique (50) et à son autre extrémité, à un dispositif (7) de sélection de fonctions.

**11 -** Dispositif selon une des revendications précédentes, caractérisé en ce que l'unité électronique est agencée pour commander également une surveillance par caméra vidéo et/ou au moins une liaison phonique externe et/ou une liaison ordinateur-moniteur et/ou une liaison sur centrale d'alarme.
